# EUROPEAN PATENT SPECIFICATION

(11) **EP 0 241 982 B1**
(45) Date of publication and mention of the grant of the patent: **24.08.1994**
(21) Application number: 87200625.9
(22) Date of filing: 03.04.1987
(51) Int. Cl.: A01C 17/00, A01C 7/10

(54) **A device for spreading material and a method of collecting same**
Streuer und Verfahren, um das Streugut zu sammeln
Epandeur et méthode pour collecter le produit épandu

(30) Priority: 07.04.1986 NL 8600868
(43) Date of publication of application: 21.10.1987
(73) Proprietor: C. van der Lely N.V., NL-3155 PD Maasland (NL)
(72) Inventor: Van der Lely, Ary, Maasland (NL); Bom, Cornelis Johannes Gerardus, Rozenburg (NL)
(74) Representative: Mulder, Herman

(56) References cited:
- DE-C- 89 685
- NL-A- 273 620
- NL-A- 6 913 057

## Description

The invention relates to device for spreading material, in particular for spreading granular and/or pulverulent material, such as fertilizer, comprising a frame, a hopper having an outlet with a dosing member, at least one spreader member and a collector having a coupling member by means of which it is coupled detachably to the device, the collector enclosing a wall located at the pheriphery of the spreader member and at a relatively short distance therefrom.

A device of this kind is known from NL-A-273620. In this known device the member comprises a wall located at the periphery of the spreader member to collect and guide the material to two outlet openings for spreading the material more or less radially in two opposite directions. It is an object of the invention to provide a simple device of the above-defined type, with the collector of which the material can be collected and delivered in a collector bin.

According to the invention, this can be achieved in that the collector has a slotted aperture which fits around a transmission box enclosing means for driving the spreading member, said slotted aperture being provided with flexible seals which can pass along the transmission box, the collector member having a removable cover the inner edge of which is provided with a seal joining the dosing member, the collector enclosing at its lower side an open end for delivering the collected material in a collector bin. The seals between the collector member and the other parts of the device prevent material from being discharged without being delivered in the collector bin. Owing hereto the material delivered from the hopper by means of the dosing member and spread by the spreader member in the collector member can be collected in an advantageous way to measure the quantity of material which will flow through the dosing member during e.g. a unit of time. Further, as a result of the flexible seals, the construction of the collector member may be simple and easy to handle by coupling with or detaching same from the device, respectively.

According to a further embodiment the cover has two contiguous portions, each provided with a sealing edge, said portions being applicable to the collector member or removable therefrom independently of each other.

An advantageous embodiment is obtained when the coupling member comprises a hook which is connectable with a tight fit on a holder which is rigidly connected to the frame.

In an advantageous method of using the device according to the invention, whereby said collector member is mounted around the spreading member having spreader blades and the material is supplied for a period of time and at a desired setting of the dosing member from the hopper to the spreader member via the dosing member, which material is discharged via said spreader member and subsequently collected by the collector, said method is characterized in that the blades are removed from the spreader member prior to mounting the collector around the spreader member, that the period of time is predetermined and that the material collected by the collector is delivered in a collector bin to determine the quantity of material discharged in the predetermined period in order to determine the quantity of material discharged per unit of time via the dosing member. Since the spreader blades have been removed, the material is thrown away against the collecting wall of the collector member with a low force, so that the structure of the material will not be affected and the material will be suitable again for spreading.

The DE-C-89685 shows a known construction of a guide member with which the material spread by the spreader member can be divided evenly over the ground within the wheel tracks of the spreader. This known guide member does not collect the material to be delivered in a collector bin.

For a better understanding of the invention and to show how the same may be carried into effect, reference will now be made, of way of example, to the accompanying drawings, in which:
Figure 1 is a side view of a device for spreading material in accordance with the invention;

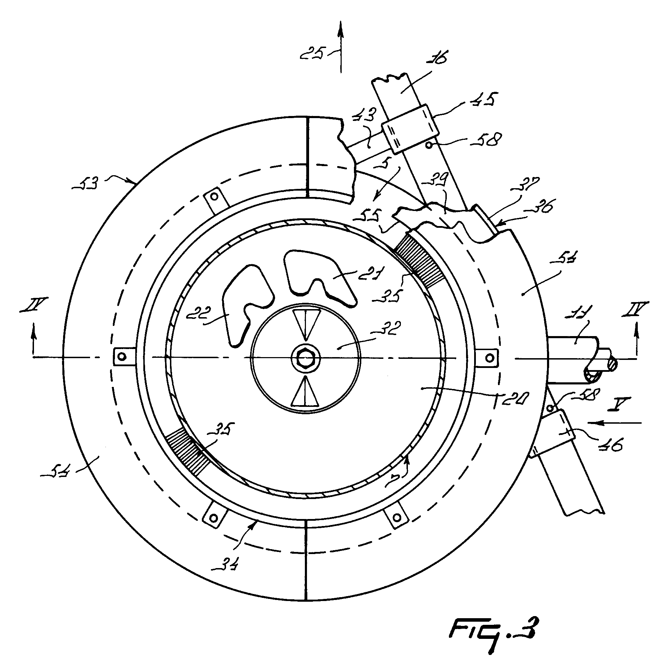

Figure 2 is a rear view, to a reduced scale, of the device of Figure 1, said device including a collector member;
Figure 3 is a plan view, to an enlarged scale, of the collector member, taken on the line III-III in Figure 2;
Figure 4 is a sectional view of the collector member, taken on the line IV-IV in Figure 3, and
Figure 5 is a view of the collector member, taken in the direction of the arrow V in Figure 3.

The device for spreading material shown in the drawings comprises a frame 1, to which a hopper 2 is mounted. The hopper 2 has two discharge nozzles 3 and 4 which are arranged spaced from each other and transversely to the direction of normal operative travel 25 of the device, and below which spreader members 5 and 6 are arranged. Dosing members 7 and 8 are located between the discharge nozzles 3 and 4 and the respective spreader members 5 and 6. The spreader members 5 and 6 are pivotally bearing-supported in gear boxes 9 and 10, which are intercoupled by a box-like transmission box 11 having in its interior transmission members arranged between the two gear boxes 9 and 10. A gear box 12 having a coupling shaft 17 is provided halfway between the two gear boxes 9 and 10.

The frame comprises a vertical frame portion 13 fitted with coupling members 14 and 15, by means of which the device can be coupled to the lifting hitch of a tractor or similar suchlike vehicle. The frame 1 furthermore comprises a supporting beam 16 which, when the device is in the upright position, is in a substantially horizontal position. The supporting beam 16 is in the shape of a V, not further shown, and by means of the ends of the V-shaped, forwardly diverging legs connects to vertical beams of said frame portion 13. As is apparent from Figure 4, the lower beam 16 has a rectangular cross-section.

Each of the dosing members 7 and 8 comprises a discharge member 20, which is shown in greater detail in Figure 4 for the dosing member 7, and which in this embodiment is annular and has walls that are curved in accordance with a segment of a sphere. In this embodiment, each of the discharge members 20 has two discharge outlets 21 and 22. A slide 23, by means of which the discharge outlets 21 and 22 can be closed optionally to a greater or lesser extent, is movably provided to the outer side of the discharge member 20. The slide 23 is coupled to an adjusting mechanism 24, which is not further shown, but by means of which the slide can be set and optionally be moved to a desired position for closing the discharge outlets to a greater or lesser extent. The discharge outlets 21 and 22 in the discharge members 20 of the two dosing members 7 and 8 are located symmetrically with respect to a vertical centre plane 24 extending in the normal direction of operative travel 25 of the device and constituting a plane of symmetry.

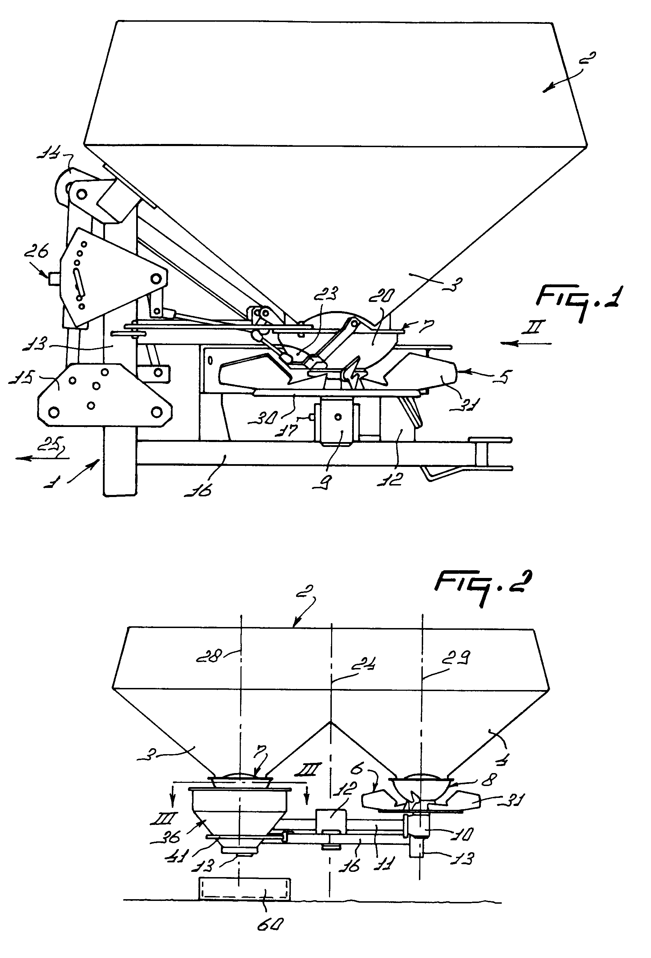

The spreader members 5 and 6 are rotatable around the axes of rotation 28 and 29 which, when the machine is in an upright position as shown in Figure 1, are vertical. The spreader members are rotatably bearing-supported in the gear boxes 9 and 10 and are coupled to transmission members located in the gear boxes 9 and 10, the transmission box 11 and the gear box 12. As is shown in greater detail in Figure 4 for the spreader member 5, each of the spreader members 5 and 6 has a plate-shaped portion 30, on which spreader blades 31 are mounted. Each of the spreader members 5 and 6 has a supporting disc 32 which is pivotally connected to the spreader member. The supporting disc 32 has a supporting edge 33 bearing the bottom side of the discharge member 20, as is apparent in particular from Figure 4.

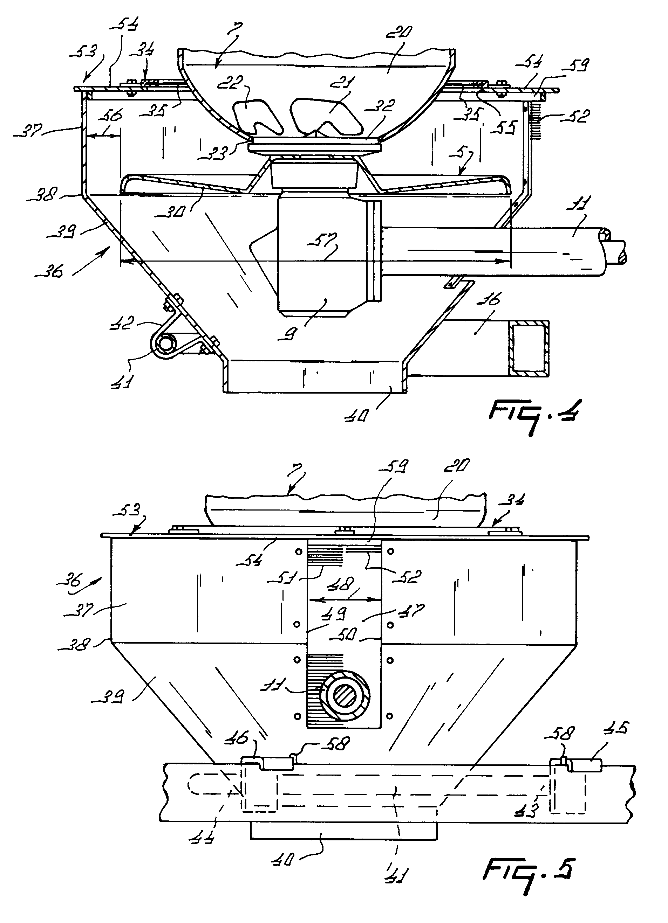

The device includes a collector member 36 which is shown in greater detail in the Figures 3 to 5 and, in this embodiment, surrounds the spreader member 5. The collector member 36 has a cylindrical collecting wall 37, the lower side 38 of which is located at the level of the lower side of the spreader member 5. By means of its lower side the collecting wall 37 is contiguous to a conical, downwardly tapering guide member 39, whose lower side has an open cylindrical end 40.

Near the lower side of the guide member 39, the collector member 36 has a coupling member 41 connected thereto by means of supporting members 42. The coupling member 41 is constituted by a U-shaped pipe having legs 43 and 44 which are parallel to each other. As is apparent in particular from Figures 4 and 5, the legs 43 and 44 of the coupling member are provided at their ends with hooks 45 and 46 of an angular cross-section. Said hooks are constituted by U-shaped strip material and have a long leg and a short one. The hooks 45 and 46 are provided with a close fit over a leg of the lower beam 16, as is apparent from the Figures 3, 4 and 5.

A slotted aperture 47 of a width 48 is made in the cylindrical collecting wall 37 and in part of the conical guide wall 39. Flexible guide means 51 and 52, constituted in this embodiment by hair-shaped, flexible sealing members, are provided on the vertically extending sides 49 and 50 of said slotted aperture. Each of said sealing members has hair-shaped projections extending from the relevant side 49 or 50 to halfway the width 48 of said slotted aperture 47.

At its upper side the collector member 36 has a cover 53 consisting of two substantially identical parts 54. The cover 53 has an inner edge 55 extending with some clearance around the discharge member 20. The inner edge 55 of the cover halves 54 have flexible sealing edges 34 which, like the sealing members 51 and 52, consist of hair-shaped projections 35 extending from the inner edge 55 to the periphery of the discharge member 20. These hair-shaped sealing members 35 are flexible and constitute a flexible seal between the upper side of the collector member 36 and the discharge member 20.

During operation, the device is coupled to the lifting hitch of a tractor or similar suchlike vehicle with the aid of connecting members 14 and 15. By means of an intermediate shaft, not further shown, the power take-off shaft of the tractor is coupled to the coupling shaft 17 of the transmission gear box 12, so that the power take-off shaft of the tractor causes the spreader members 5 and 6 to rotate. The transmission members in the various gear and transmission boxes are such that, during operation, the spreader members are brought to rotation in directions opposite to each other. During operation, the device will be moved in the direction 25. The outlets 21 and 22 have been provided such, and the spreader members 5 and 6 are formed and driven such that each of the spreader members distributes the material over the full width of the strip of soil on which the material is spread during operation. During normal operation, this strip of soil will extend equidistantly on either side of the centre plane 24 extending in the direction of operative travel 25.

The quantity of material which, depending on the rate of travel, the spreading width and the quantity to be spread per unit of area, is to flow from the outlets 21 and 22 of the respective dosing members 7 and 8 can be controlled by closing said outlets to a greater or lesser extent by means of the slides 23. In order to be able to measure, in advance, the quantity of material flowing per unit of time from the preset free passage of the outlets 21 and 22, the collector member 36 can be positioned around one of the spreader members 5 or 6, the arrangement being such as is shown in the drawings wherein the collector member 36 surrounds the spreader member 5. Prior to the positioning of the collector member around the spreader member, the blades 31 are removed from the spreader member concerned, as is apparent from Figure 4. The wall 37 has such a cylindrical circumference that it surrounds the plate-shaped portion 30 of the spreader member. In this embodiment, the wall 37 is placed at a distance 56 from the periphery of the plate-shaped member 30. In this embodiment, the distance 56 is equal to approximately 1/12th part of the diameter 57 of the plate-shaped member 30. Although the distance 56 may alternatively be somewhat greater or smaller, the distance 56 will be chosen such that the collector member 36 can be of a relatively small size and the material can flow downwards between the collecting wall 37 and the periphery of the plate-shaped member 30. Preferably, the distance 56 will not be greater than approximately 1/6th of the diameter 57. In this embodiment, said distance is approximately 40 mms and it is preferred not to exceed approximately 70 mms. The minimum distance 56 can be chosen such that the wall 37 is just sufficiently free from the periphery of the plate-shaped member 30 to allow the material to pass. In this embodiment, the sealing edges 51 and 52 are provided at the inner side of the wall 37, as is apparent from Figure 4. If so desired, it is possible to connect the sealing members 51 and 52 to the outer side of the cylindrical wall 37 along the edges 49 and 50.

The collector member 36 can be fastened in a simple manner to the frame by omitting the cover 53 from its upper side and thereafter hooking same around the upper side of the lower beams 16 by means of the hooks 45 and 46, as is shown in the drawings. The hooks 45 and 46 fit around the beam 16. In this situation, the beam 16 constitutes a holder for the hooks 45 and 46. Alternatively, the hooks 45 and 46 may be of a different shape and separate holders may be provided on the beam 16. The collector member 36 can be mounted from the lower side of the transmission box 11 by sliding the slotted aperture 47 over the box 11. Thereafter, when the wall 37 is approximately centered around the plate 30, the hooks 45 and 46 can be placed over the beam 16. Hanging the hooks 45 and 46 on the beam 16 is tantamount to fitting the collector member to the frame, no further actions being necessary. To prevent the hooks 45 and 46 from being shifted along the beam 16, stops, e.g. pins, can be provided on the beams 16 near one or both of the two hooks 45 and 46, which stops are not shown in this embodiment, to ensure that the position of the hooks is locked relative to said beam and can be determined easily. Thereafter the cover halves 54 can be placed around the discharge member 20 and on the top side of the collecting wall 37. At the contiguous halves 54, the cover 53 is provided with a centering edge 59, which bears on the inner side of the collecting wall 37.

After the slides 23, forming a closing member for the respective outlets, have been positioned in a desired position relative to the outlets 21 and 22 so as to close same to a greater or lesser extent, the material can be discharged from the discharge nozzle 3. The quantity of material flowing out during a given unit of time, arriving on the plate 30 and being flung away because of its rotation, is collected by the collecting wall 37. From the collecting wall 37 the material thrown away will be collected in a collector bin 60 via the guide member 39 and the nozzle 40. After a predetermined period of time the discharge outlets can be closed by the slide 23, so that the quantity of material flown out from the outlets 21 and 22 per unit of time can be established, and also whether said quantity corresponds to the desired quantity of material to be spread per unit of time. The hair-shaped, flexible sealing edges 34 and 35 of the cover and the edges 51 and 52 of the slotted aperture 47 ensure that, during this test, no material is lost without being collected in the collector bin. In addition, the flexible sealing edges facilitate the mounting of the collector member on the device and the removal of same therefrom. The test having been completed, the collector member 36 can be removed again from the device, whereafter the blades 31 are re-mounted on the plate-shaped member 30. Then the device is ready for the spreading of material.

The material to be spread is loaded in the hopper 2 and is fed to the spreader members 5 and 6 via the discharge outlets 21 and 22 of the dosing members 7 and 8, which outlets are closed to a greater or lesser extent by the slides 23. Said spreader members will spread the material over the desired width, the device travelling at a desired speed in the direction indicated by the arrow 25. Because of the previously made test to establish the required passage size in the discharge outlets 21 and 22, it is possible to accurately determine the spread of the desired quantity of material for each hectare. By removing, during the flow test using the collector member 36, the spreader blade 31 from the plate-shaped portion 30, the material will not be flung with an excessively high force against the wall 37. In this manner, it can be accomplished that the grain structure of in particular granular material will not be damaged. Consequently, the material flowing from the hopper during the test can be used again for spreading on the surface to be spread, so that this quantity of material does not get lost.

The collector member according to the invention and in accordance with the embodiment shown in the drawings, can be kept very simple as regards its construction and can be easily connected to the machine. In addition, the quantity of material flowing out per unit of time can be checked advantageously and collected for re-use by means of the method described in the foregoing, in which method the blades are removed from the plate-shaped member 30.

The device is substantially symmetrical relative to the plane 24. This renders it possible for the collector member 36 to be alternatively arranged around the spreader member 6 instead of around the spreader member 5. Although in this embodiment the collecting wall 37 is cylindrical in shape, it may also be of a different shape.

The invention is not limited to the features described in the foregoing, but also relates to all the features that are shown in the drawings and are apparent therefrom in so far as is defined by the claims.

## Claims

1. A device for spreading material, in particular for spreading granular and/or pulverulent material, such as fertilizer, comprising a frame (1), a hopper (2) having an outlet (21, 22) with a dosing member (7, 8), at least one spreader member (5, 6), and a collector (36) having a coupling member (41) by means of which it is coupled detachably to the device, the collector (36) enclosing a wall (37) located at the pheriphery of the spreader member (5) and at a relatively short distance therefrom, characterized in that the collector has a slotted aperture (47) which fits around a transmission box (11) enclosing means for driving the spreading member, said slotted aperture being provided with flexible seals (51 and 52) which can pass along the transmission box, the collector member (36) having a removable cover (53) the inner edge (55) of which is provided with a seal (34) joining the dosing member (7, 8), the collector enclosing at its lower side an open end (40) for delivering the collected material in a collector bin (60).

2. A device as claimed in claim 1, characterized in that the cover (53) has two contiguous portions (54) each provided with a part of a sealing edge, said portions, independently of each other, are applicable to the collector member (41) or removable therefrom.

3. A device as claimed in claims 1 or 2, characterized in that the flexible sealing members (34, 51, 52) are formed by hair-shaped means.

4. A device as claimed in any one of the preceding claims, characterized in that the collecting wall (37) is of a cylindrical shape and by means of its lower side is contiguous to a guide member (39) which tapers into the downward direction and ends in the open end to adjoin the collector bin.

5. A device as claimed in any one of the preceding claims, characterized in that the coupling member comprises at least one hook (45, 46) which is connectable with a tight fit on a holder (16) which is rigidly connected to the frame.

6. A device as claimed in claim 5, characterized in that the coupling member (41) includes a carrier which extends around at least part of the collector member (36) and to which two hooks (45, 46) are fitted which are applicable with a tight fit around a frame beam (16).

7. A device as claimed in any one of the preceding claims, characterized in that the device comprises two spreader members (5, 6) and is substantially symmetrical relative to its vertical centre plane, the collector member (36) being alternatively arrangeable around one of the two spreader members (5, 6).

8. A method of using the device as claimed in any one of the preceding claims, whereby said collector member (36) is mounted around the spreading member (5, 6) having spreader blades (31) and the material is supplied for a period of time and at a desired setting of the dosing member (7, 8) from the hopper to the spreader member via the dosing member, which material is discharged via said spreader member and subsequently collected by the collector, characterized in that the blades are removed from the spreader member prior to mounting the collector around the spreader member, that the period of time is predetermined and that the material collected by the collector is delivered in a collector bin (60) to determine the quantity of material discharged in the predetermined period in order to determine the quantity of material discharged per unit of time via the dosing member.

## Patentansprüche

1. Streugerät, insbesondere zum Streuen von körnigem und/oder pulverigem Gut, wie z. B. Kunstdünger, mit einem Rahmen (1), einem Vorratsbehälter (2), der einen mit einem Dosierer (7, 8) versehenen Auslaß (21, 22) hat, mindestens einem Streuglied (5, 6) und einem Kollektor (36) mit einem Verbindungsglied (41), mittels dessen er mit dem Gerät lösbar verbunden ist, wobei der Kollektor (36) eine Wandung (37) aufweist, die mit geringem Abstand von dem Streuglied (5) nahe dessen Peripherie angeordnet ist,
dadurch gekennzeichnet, daß der Kollektor eine schlitzförmige Öffnung (47) hat, die ein den Antrieb des Streugliedes umschließendes Getriebegehäuse (11) umgibt, wobei die schlitzförmige Öffnung mit flexiblen Dichtungen (51 und 52) versehen ist, die an dem Getriebegehäuse entlangzubewegen sind, und wobei der Kollektor (36) einen abnehmbaren Deckel (53) hat, dessen innerer Rand (55) eine an dem Dosierer (7, 8) anliegende Dichtung (34) aufweist, und wobei der Kollektor an seiner unteren Seite ein offenes Ende (40) zur Abgabe des gesammelten Gutes in einen Sammelbehälter (60) hat.

2. Gerät nach Anspruch 1,
dadurch gekennzeichnet, daß der Deckel (53) zwei aneinander anliegende Teile (54) hat, die jeweils mit einem Teil eines Dichtungsrandes versehen sind, wobei die Teile unabhängig voneinander an dem Kollektor (41) anzubringen und von ihm abzunehmen sind.

3. Gerät nach Anspruch 1 oder 2,
dadurch gekennzeichnet, daß die flexiblen Dichtungen (34, 51, 52) durch bürstenartige Vorrichtungen gebildet sind.

4. Gerät nach einem der vorhergehenden Ansprüche,
dadurch gekennzeichnet, daß die Kollektorwandung (37) zylinderförmig ausgebildet ist und an ihrer unteren Seite in eine Führung (39) übergeht, die sich zur Ausrichtung auf den Sammelbehälter nach unten verjüngt und in dem offenen Ende ausläuft.

5. Gerät nach einem der vorhergehenden Ansprüche,
dadurch gekennzeichnet, daß das Verbindungsglied mindestens einen Haken (45, 46) aufweist, der mit festem Sitz an einem Halter (16) anzubringen ist, der mit dem Rahmen starr verbunden ist.

6. Gerät nach Anspruch 5,
dadurch gekennzeichnet, daß das Verbindungsglied (41) einen Träger aufweist, der den Kollektor (36) zumindest teilweise umgreift, und an dem zwei Haken (45, 46) angeordnet sind, die mit festem Sitz an einem Rahmenbalken (16) anzubringen sind.

7. Gerät nach einem der vorhergehenden Ansprüche,
dadurch gekennzeichnet, daß das Gerät zwei Streuglieder (5, 6) aufweist und im wesentlichen symmetrisch zu seiner vertikalen Mittelebene ausgebildet ist, wobei der Kollektor (36) alternativ derart anzubringen ist, daß er eines der beiden Streuglieder (5, 6) umschließt.

8. Verfahren zur Verwendung des Gerätes nach einem der vorhergehenden Ansprüche, wobei der Kollektor (36) um den mit Wurfschaufeln (31) versehenen Streuglied (5, 6) angebracht ist und das Gut während eines Zeitraumes und bei einer gewünschten Einstellung des Dosierers (7, 8) aus dem Vorratsbehälter über den Dosierer zu dem Streuglied befördert, über das Streuglied ausgebracht und anschließend von dem Kollektor aufgefangen wird,
dadurch gekennzeichnet, daß die Schaufeln vor Anbringen des Kollektors um den Streuglied von dem Streuglied entfernt werden, daß der Zeitraum vorgegeben ist, und daß das von dem Kollektor aufgefangene Gut in einen Sammelbehälter (60) abgegeben wird, um die während des vorgegebenen Zeitraumes ausgebrachte Gutmenge und damit die pro Zeiteinheit über den Dosierer ausgebrachte Gutmenge zu bestimmen.

## Revendications

1. Dispositif pour épandre de la matière, en particulier pour épandre de la matière granulaire et/ou pulvérulente, telle que de l'engrais, comprenant un châssis (1), une trémie (2) ayant un orifice de sortie (21, 22) avec un organe doseur (7, 8), au moins un organe épandeur (5, 6), et un collecteur (36) ayant un organe de couplage (41) au moyen duquel il est couplé de manière amovible au dispositif, le collecteur (36) comportant une paroi (37) située à la périphérie de l'organe épandeur (5) et à une distance relativement courte de celui-ci,
**caractérisé** en ce que le collecteur a une ouverture à encastrement (47) qui s'ajuste autour d'une boîte de transmission (11) renfermant des moyens pour entraîner l'organe épandeur, ladite ouverture à encastrement étant munie de joints d'étanchéité (51 et 52) qui peuvent passer le long de la boîte de transmission, l'organe collecteur (36) ayant un couvercle amovible (53) dont le bord intérieur (55) est muni d'un joint d'étanchéité (34) se joignant à l'organe doseur (7, 8), le collecteur comprenant à son côté inférieur une extrémité ouverte (40) pour déverser la matière collectée dans un bac collecteur (60).

2. Dispositif selon la revendication 1, caractérisé en ce que le couvercle (53) a deux parties contigües (54) munies chacune d'une partie d'un bord d'étanchéité, lesdites parties pouvant, indépendamment l'une de l'autre, être appliquées à l'organe collecteur (36) ou en être retirées.

3. Dispositif selon les revendications 1 ou 2, caractérisé en ce que les organes flexibles d'étanchéité (34, 51, 52) sont constitués par des moyens en forme de poils.

4. Dispositif selon l'une quelconque des revendications précédentes, caractérisé en ce que la paroi collectrice (37) a une forme cylindrique et est contigüe, au moyen de son bord inférieur, à un organe de guidage (39) qui s'effile vers le bas et se termine dans l'extrémité ouverte pour être contigu au bac collecteur.

5. Dispositif selon l'une quelconque des revendications précédentes, caractérisé en ce que l'organe de couplage comprend au moins un crochet (45, 46) qui peut être connecté avec un ajustage serré sur un support (16) qui est relié au châssis de manière rigide.

6. Dispositif selon la revendication 5, caractérisé en ce que l'organe de couplage (41) comporte un élément porteur qui s'étend autour d'au moins une partie de l'organe collecteur (36) et sur lequel sont montés deux crochets (45, 46) qui peuvent être appliqués à ajustage serré autour d'une poutre du châssis (16).

7. Dispositif selon l'une quelconque des revendications précédentes, caractérisé en ce que le dispositif comprend deux organes épandeurs (5, 6) et est substantiellement symétrique par rapport à un plan vertical médian, l'organe collecteur (36) pouvant être disposé alternativement autour d'un des deux organes épandeurs (5, 6).

8. Procédé d'utilisation du dispositif selon l'une quelconque des revendications précédentes, dans lequel ledit organe collecteur (36) est monté autour de l'organe épandeur (5, 6) ayant des lames épandeuses (31) et la matière est débitée pendant une période de temps et sous un réglage voulu de l'organe doseur (7, 8) à partir de la trémie vers l'organe épandeur à travers l'organe doseur, laquelle matière est déchargée à travers ledit organe épandeur et ensuite collectée par le collecteur, **caractérisé** en ce que les lames sont retirées de l'organe épandeur avant le montage du collecteur autour de l'organe épandeur, en ce que la période de temps est prédéterminée et en ce que la matière collectée par le collecteur est déversée dans un bac collecteur (60) pour déterminer la quantité de matière débitée dans la période prédéterminée afin de déterminer la quantité de matière débitée par unité de temps à travers l'organe doseur.
